Europäisches Patentamt

European Patent Office

Office européen des brevets

(11) Numéro de publication: **0 057 148**

A2

# (12) DEMANDE DE BREVET EUROPEEN

(21) Numéro de dépôt: 82400127.5

(22) Date de dépôt: 25.01.82

(51) Int. Cl.³: **B 29 F 1/00**

(30) Priorité: 26.01.81 FR 8101549

(43) Date de publication de la demande:
04.08.82 Bulletin 82/31

(84) Etats contractants désignés:
AT BE CH DE GB IT LI LU NL SE

(71) Demandeur: Paniez, Jean-Marie Joseph
Chemin de la Barbière aux bosses
F-51200 Epernay(FR)

(71) Demandeur: Desbordes, Denise Odette
85, rue Appert-Raulin Oiry
F-51200 Epernay(FR)

(72) Inventeur: Paniez, Jean-Marie Joseph
Chemin de la Barbière aux bosses
F-51200 Epernay(FR)

(72) Inventeur: Desbordes, Denise Odette
85, rue Appert-Raulin Oiry
F-51200 Epernay(FR)

(74) Mandataire: Gerardin, Robert Jean René
Cabinet Robert Gerardin 2, rue Gambetta
F-51200 Epernay(FR)

(54) Machine à mouler les matières plastiques.

(57) La machine comporte un plateau rotatif (I), à la périphérie duquel sont fixés les moules (2), entraîné en rotation par un arbre (19) et une roue à rochets (II) mue par une bielle (10) et une tige coulissante (9) reliée au coulisseau (6), supportant les vis d'injection (3 et 4), qui se déplace sur les glissières (12 et 13) sous l'action d'un vérin à double effet (8). Les vis d'injection, réunies à l'avant par une plaque coulissante (5), sont disposées en V de façon qu'elles soient chacune à l'aplomb d'un orifice de sortie de la trémie (7).

FIG_1

EP 0 057 148 A2

Croydon Printing Company Ltd.

## MACHINE A MOULER LES MATIERES PLASTIQUES

La présente invention concerne les machines à mouler les matières plastiques par injection.

Pour le moulage en série d'éléments en matière plastique, on utilise généralement des moules à empreintes multiples montés sur
un plateau rotatif (carrousel). L'unité d'injection comporte une
trémie d'alimentation, une vis entraînée en rotation par un moteur, une chambre de plastification et une buse d'injection. La
matière plastique est injectée dans le moule par un orifice, ou
point d'injection, dans lequel pénètre un embout, solidaire de
la buse, qui assure l'écoulement et l'étanchéité pendant l'opération d'injection. Le recul de l'unité d'injection permettant
la rotation du plateau et la permutation circulaire des moules,
sa remise en batterie et la force de contact avec le moule, sont
obtenus à l'aide d'un vérin hydraulique qui exerce son action
sur un coulisseau, monté sur des glissières, sur lequel est
fixée l'unité d'injection. Ce vérin est réservé uniquement à cet
usage.

Pour le moulage par injection d'éléments en matière plastique
cellulaire, il est indispensable d'utiliser une buse d'injection
à obturateur pour empêcher le gaz, libéré par la décomposition de
l'agent gonflant, de refluer du moule vers la chambre de plastification et la vis.

Lorsque la productivité exige l'emploi de plusieurs points d'injection séparés sur un même moule, on utilise généralement un
nombre égal de buses d'injection alimentées par une unique chambre de plastification desservie par une vis d'injection.

Lorsqu'il s'agit de réaliser, par ce moyen, des éléments en matière plastique cellulaire à porosité très fine, il en résulte
un début de décomposition de l'agent gonflant dans la chambre de plastification, qui se traduit par une expansion prématurée et des moulages de mauvaise qualité.

Le problème se complique encore lorsque plusieurs vis alimentent la même chambre de plastification, car il est difficile d'obtenir un équilibre parfait des dosages et des débits entre les vis et un transfert suffisamment rapide de la matière plastifiée, de la chambre vers le moule, pour éviter la déperdition de gaz. Il en résulte que la moulée suivante est incomplète ou présente une densité différente de celle recherchée. De plus, l'épaisseur de la peau de l'élément moulé en matière plastique cellulaire est fonction de la vitesse et de la pression d'injection, ainsi que de la section des canaux et du nombre de points d'injection. Il y a donc intérêt à effectuer le plus rapidement possible le transfert de la matière plastifiée dans le moule par des orifices et des canaux de section et de disposition appropriées.

Par ailleurs, sur les machines à injecter multipostes, à unité d'injection fixe et à moules tournants, le plateau rotatif, sur lequel sont montés les moules, est mû par un moteur indépendant dont les mises en route et les arrêts sont synchronisés avec les mouvements d'avance ou de recul de l'unité d'injection. Il en résulte une certaine complexité qui se répercute dans le coût de la machine et dans ses frais d'entretien.

La machine à mouler par injection les matières plastiques cellulaires, objet de l'invention, permet d'éviter ces inconvénients. Sur celle-ci, en effet :
- Les moules possèdent plusieurs points d'injection.
- Chaque point d'injection est desservi par une buse raccordée directement à une vis d'injection particulière alimentée séparément.
- Les embouts d'injection sont disposés parallèlement à l'axe de déplacement de l'unité d'injection.
- Les vis sont très longues et de fort diamètre.

- Le plateau rotatif porte-moules est mû par le vérin qui assure le déplacement longitudinal de l'unité d'injection.

Il en résulte de ceci que :

- le tranfert des produits plastifiés dans le moule s'effectue à une vitesse et à une pression suffisamment grande pour que la décomposition de l'agent gonflant ne se produise qu'à l'intérieur du moule, afin d'obtenir la densité recherchée, de façon régulière.

- Chaque point d'injection reçoit la quantité de matière optimum, à la pression et à la température idéales.

- Aucune fuite de gaz ne peut se produire au niveau du contact des embouts avec le moule, puisque l'axe de ceux-ci est parallèle à l'axe de déplacement du coulisseau sur lequel est fixé l'unité d'injection.

- Une synchronisation rigoureuse et simple du mouvement du plateau rotatif porte-moules, par rapport au déplacement de l'unité d'injection, est ainsi directement obtenue.

- La construction de la machine est simplifiée au niveau du système d'entraînement du plateau porte-moules.

- Le nombre d'empreintes par moule peut être considérablement augmenté.

- La cadence de permutation des moules peut être augmentée, puisque le temps d'injection est diminué.

- Le taux de rebut est extrêmement faible, car un écart de dosage des produits ou un défaut de fonctionnement d'une vis d'injection n'altérerait la qualité que d'une fraction seulement de la production.

Cette machine se caractérise principalement par le fait que les moules comportent chacun plusieurs points d'injection, que l'unité d'injection comporte autant de trémies, de vis d'injection et de buses d'injection, que les buses sont alimentées directement par les vis, que le déplacement angulaire du plateau rotatif porte-moules est assuré par le recul du coulisseau supportant l'unité d'injection, que l'indexation précise et le blocage du plateau porte-moules pendant l'injection sont obtenus à l'aide d'un doigt escamotable, commandé,lui aussi, par le mouvement du coulisseau et que les embouts d'injection sont disposés parallèlement au sens de déplacement de l'unité d'injection.

Les deux vis inférieures sont disposées parallèlement et côte à côte, alors que les vis des rangées supérieures sont disposées en V selon un angle tel que les trémies d'alimentation puissent être placées côte à côte, directement à l'aplomb de chaque vis, et alignées perpendiculairement à l'axe de déplacement de l'ensemble constituant l'unité d'injection.

Le déplacement angulaire du plateau porte-moules est assuré par une roue libre,ou une roue à rochets,entraînée en rotation par le coulisseau de l'unité d'injection, lors du recul de celui-ci.

Cette roue libre,ou à rochets,est reliée au coulisseau de l'unité d'injection, par une bielle et une tige coulissante, et une manivelle ou un levier réglables en position relative.

La bielle d'entraînement de la roue libre,ou à rochets,est reliée à l'une de ses extrêmités par un oeil,monté entre deux ressorts à tension et à position réglables par un système de vis et d'écrous.

Le doigt escamotable,servant à l'indexation précise et au blocage du plateau en position d'injection,est constitué d'un tronc de prisme prolongé respectivement par une partie parallélépipédique, à l'extrêmité de laquelle sont montés deux roulements à billes.

L'indexation et le blocage du plateau porte-moules sont obtenus par pénétration du doigt escamotable dans des rainures, de même forme et de mêmes dimensions que celles de celui-ci, disposées régulièrement à la périphérie du plateau porte-moules, selon le nombre de postes.

Le freinage du plateau porte-moules, avant indexation puis blocage, est obtenu à l'aide d'un frein commandé, lui aussi, par le déplacement du coulisseau supportant l'unité d'injection.

Le déplacement longitudinal du coulisseau supportant l'unité d' injection est assuré par un vérin à double effet.

Cette conception permet d'utiliser des vis d'injection de grande longueur et de fort diamètre.

D'autres caractéristiques et avantages apparaîtront dans la description qui va suivre, d'une machine à mouler par injection les matières plastiques cellulaires, à 12 postes et à 4 vis d'injection, donnée à titre d'exemple non limitatif, au regard des dessins annexés sur lesquels :
- La figure I représente une vue d'ensemble de la machine.
- La figure 2 représente une vue de dessus de l'unité d'injection.
- La figure 3 représente une vue de face de l'unité d'injection.
- La figure 4 représente le système d'entraînement du plateau porte-moules par le coulisseau assurant le déplacement de l'unité d'injection.
- La figure 5 représente le doigt d'indexation et le dispositif de blocage du plateau.
- La figure 6 représente le dispositif de liaison de la bielle d'entraînement de la roue libre,ou à rochets,du plateau porte-moules à l'extrêmité de la tige fixée au coulisseau assurant le déplacement de l'unité d'injection.

En se reportant à la figure I, on constate que la machine se compose principalement d'un plateau rotatif I, à la périphérie duquel sont fixés les moules 2, et d'une unité d'injection comportant des vis d'injection inférieures 3 et des vis d'injection supérieures 4, reliées entre elles par la plaque 5 et le coulisseau 6 supportant les trémies d'alimentation 7 qui, sous l'action du vérin à double effet 8, assure le déplacement longitudinal des vis d'injection et la rotation du plateau rotatif I par l'intermédiaire de la tige coulissante 9, de la bielle IO et de la roue à rochets II. La plaque 5 et le coulisseau 6 se déplacent sur des glissières I2 et I3. L'indexation du plateau rotatif I s'effectue par l'intermédiaire du doigt I4 et du plateau d'indexation I5.

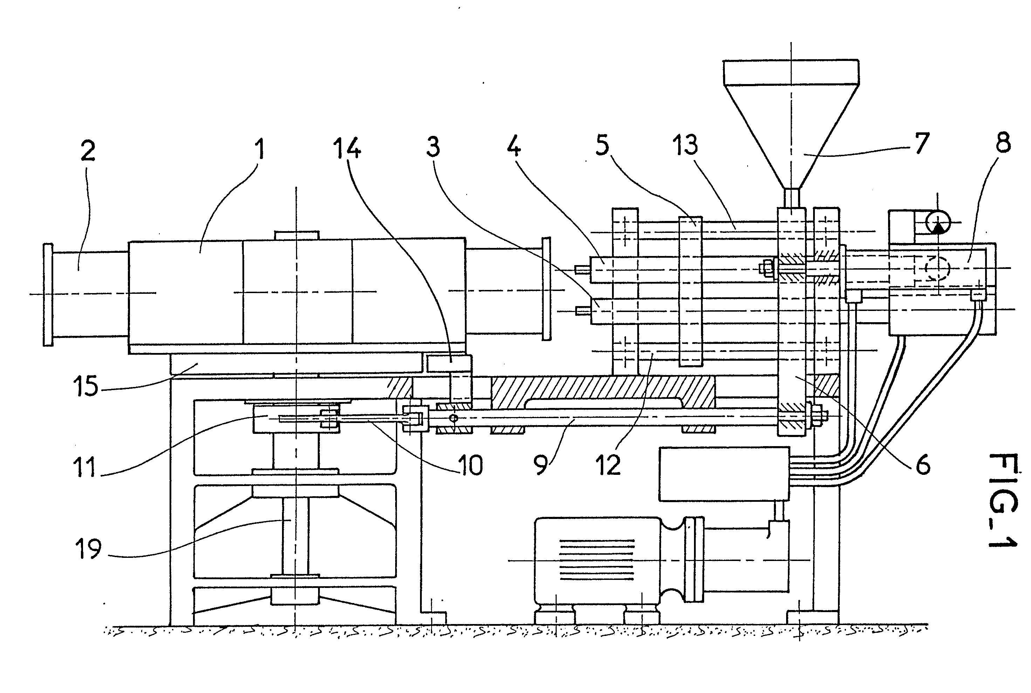

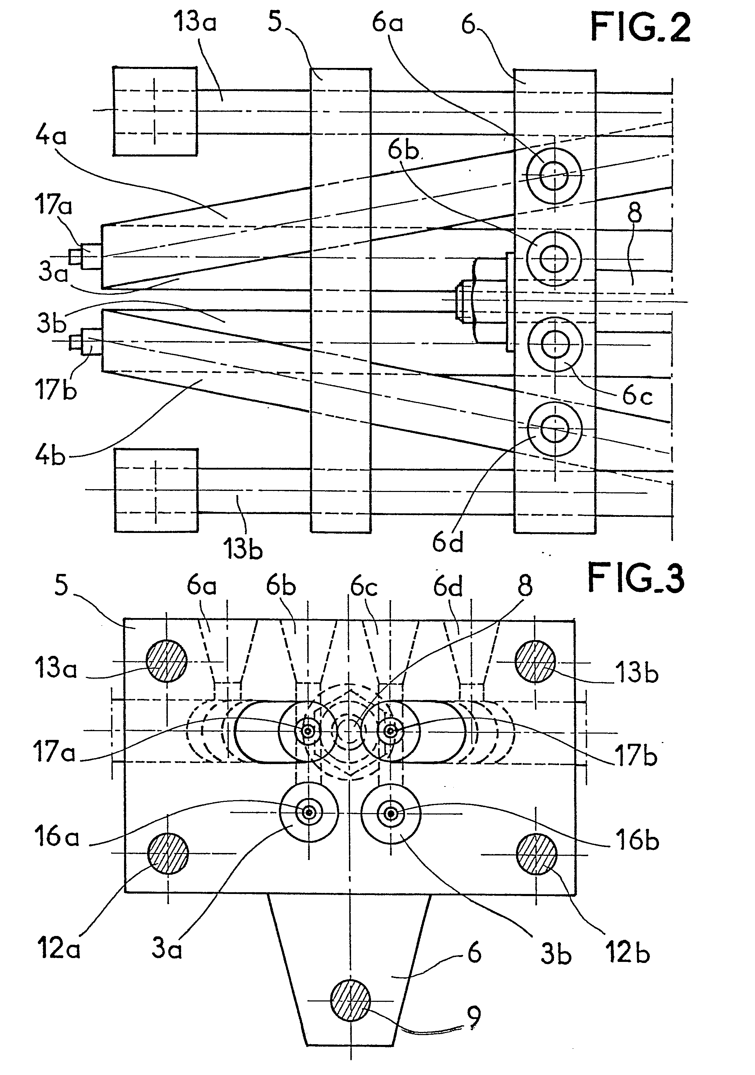

En se reportant aux figures 2 et 3, on constate que l'unité d'injection comporte deux vis inférieures 3a et 3b et deux vis supérieures 4a et 4b, réunies à l'avant par la plaque 5 et à l'arrière par le coulisseau 6, à la partie supérieure de laquelle sont aménagés les conduits d'alimentation 6a, 6b, 6c et 6d auxquels viennent se raccorder les trémies 7. Le déplacement des vis d'injection est assuré par l'intermédiaire des glissières inférieures I2a et I2b, des glissières supérieures I3a et I3b et du vérin à double effet 8. Les embouts d'injection inférieurs I6a et I6b et les embouts d'injection supérieurs I7a et I7b sont disposés parallèlement entre eux et au sens de déplacement de l'unité d'injection.

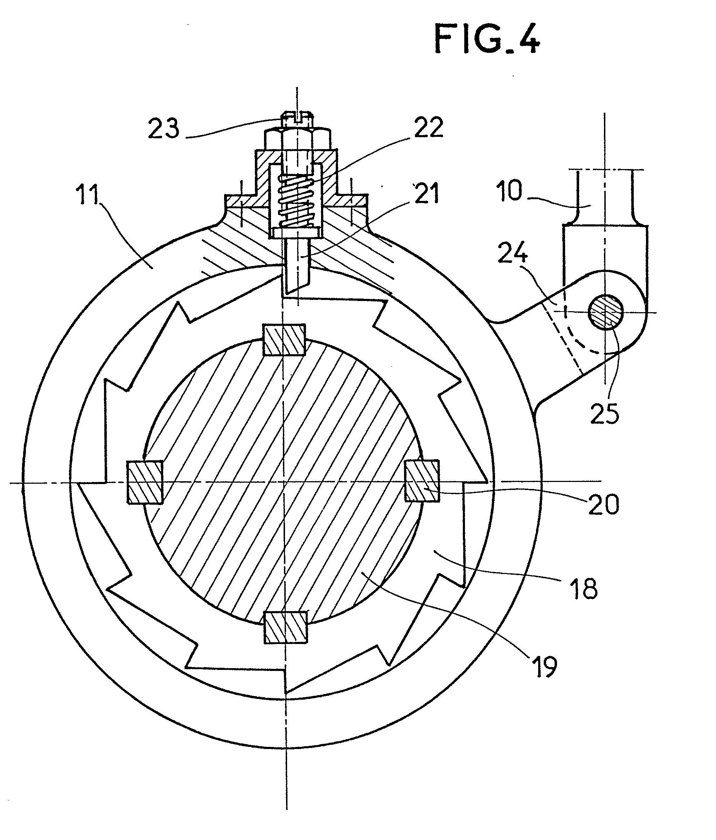

En se reportant à la figure 4, on constate que la roue à rochets II comporte une roue dentée I8 fixée à l'arbre I9 d'entraînement du plateau rotatif I par des clavettes 20, un rochet 2I rappelé vers la roue dentée I8 par un ressort 22 dont la tension est réglable par une vis 23 et une chappe d'entraînement 24, reliée à la bielle IO par l'axe 25.

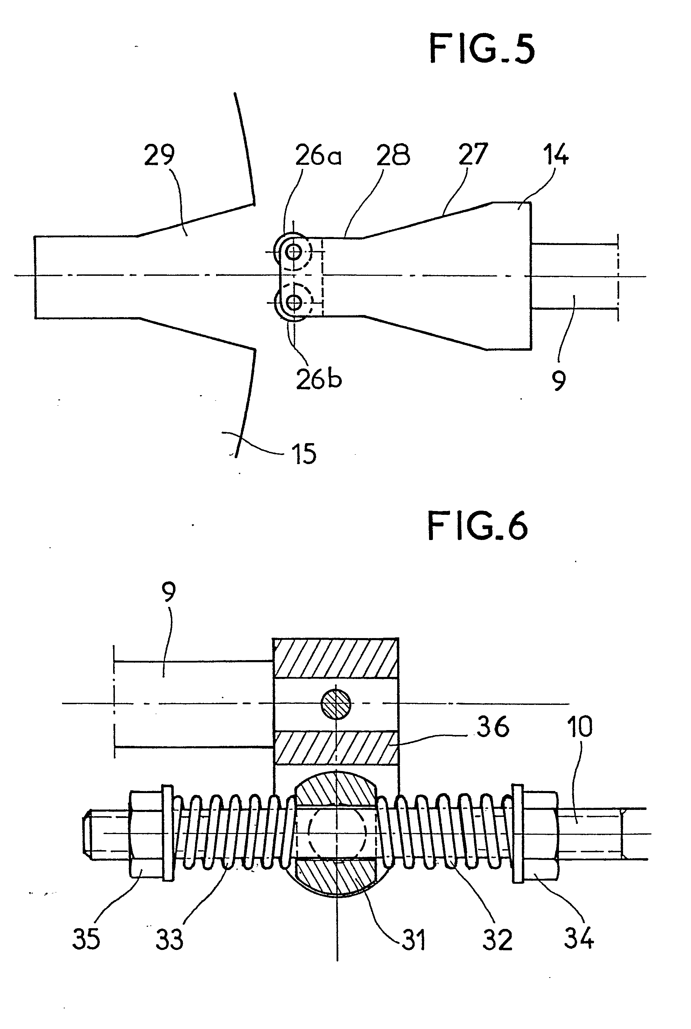

En se reportant à la figure 5, on constate que le doigt d'indexation I4 du plateau rotatif I est muni, à son extrémité, de deux roulements à billes ou galets 26a et 26b, montés dans une chappe Ce doigt d'indexation I4 est constitué d'un tronc de prisme 27

prolongé par une partie parallélépipèdique 28. Ce doigt, qui est mû par la tige coulissante 9, pénètre dans des rainures 29, de même forme et de mêmes dimensions, disposées régulièrement, en fonction du nombre de moules 2, à la périphérie d'un plateau d' indexation I5, fixé à la base du plateau rotatif I.

En se reportant à la figure 6, on constate que la bielle IO, d' entraînement de la roue à rochets II, est reliée à la tige coulissante 9 par un oeil 3I monté entre deux ressorts 32 et 33, à tension et à position réglables par les écrous 34 et 35. L'oeil 3I est monté pivotant dans une chappe 36 fixée à l'extrêmité de la tige coulissante 9.

Comme on le voit, en se reportant successivement aux figures I à 6, lorsqu'après une injection, le coulisseau 6 recule sous l'action du vérin 8, celui-ci entraîne le dégagement du doigt d'indexation I7 puis la rotation du plateau rotatif porte-moules I sous l'action de la roue à rochets II. Lorsque l'unité d'injection a parcouru la totalité de sa course de recul, le plateau rotatif I a effectué une rotation suffisante pour assurer une permutation de moules et le rapprochement de l'unité d'injection du plateau rotatif I peut être à nouveau effectué sous l'action du vérin à double effet 8, sans que cela provoque le mouvement du plateau rotatif I, puisque la roue à rochets fonctionne alors en roue libre. Dès que l'unité d'injection arrive à proximité du moule en service, le doigt d'indexation I4 pénètre dans l'un des logements 29 aménagés dans la couronne d'indexation I5. L'un des roulements 26 entre en contact avec l'un des côtés inclinés disposés à l'entrée du logement 29, ce qui communique au plateau rotatif I un léger mouvement de rotation nécessaire à la pénétration de la partie parallélépipèdique 28 dans le fond du logement 29. Lorsque la partie prismatique 27 vient en contact avec les côtés inclinés du logement 29, l'alignement précis du moule et le blocage du plateau rotatif I en position d'injection est assuré et les buses d'injection pénètrent dans leurs orifices d'injection respectifs aménagés dans le moule. L'étanchéité pendant l'injection est renforcée par la disposition, parallèle au déplacement de l'unité d'injection, des buses d'injection. La disposition et le mode de fixation des vis d'injection permettent de multiplier les points d'injection sur un même moule et, par conséquent, d'augmenter la production dans la même proportion. Le fait que les vis d'injection assurent directement le transfert de la matière plastifiée à l'intérieur du moule permet de réduire notablement le temps d'injection; ce qui augmente encore le gain de production préalablement obtenu en multipliant les points d'injection et le nombre d'empreintes dans un même moule. La disposition en V des vis d'injection permet l'alimentation individuelle des vis d'injection par des conduits situés directement à l'aplomb de l'axe de la vis et de l'orifice de sortie de la trémie.

La liaison de la bielle IO, de manoeuvre de la roue à rochets II, à la tige coulissante par l'intermédiaire d'un oeil 3I, disposé entre deux ressorts très rigides 32 et 33 maintenus en tension et en position par les écrous 34 et 35, permet à l'indexation du plateau rotatif I de s'effectuer librement sans risque d'arcboutement du rochet 2I de la roue libre II contre le flanc de la dent la plus proche et de dégrossir au préalable cet alignement en faisant varier la position de l'oeil 3I par rapport à l'extrêmité de la bielle IO, en vissant ou dévissant les deux écrous 34 et 35 simultanément dans un sens ou dans l'autre, suivant que l'on désire augmenter ou réduire la distance séparant l'oeil 3I de l'extrêmité de la bielle IO.

Cette conception offre comme principaux avantages de réduire le temps de transfert de la matière plastifiée dans le moule, d'augmenter le nombre d'empreintes par moule, de faciliter l'obtention d'une certaine densité au niveau du produit moulé, de simplifier le système d'entraînement du plateau rotatif porte-moules et de permettre une indexation rigoureuse et simple du

- 9 -

plateau rotatif.

La machine selon l'invention peut être utilisée dans tous les cas où une production intensive d'objets en matière plastique est recherchée.

Des applications particulièrement intéressantes existent dans le moulage par injection de produits en matière plastique cellulaire à porosité très fine, dont les caractéristiques mécaniques doivent avoir une valeur déterminée; ce qui est le cas, en particulier, pour les bouchons destinés à l'obturation de récipients à goulot.

- Io -

Revendications

I. Machine à mouler les matières plastiques, caractérisée en ce que les moules comportent chacun plusieurs points d'injection; en ce que l'unité d'injection possède autant de trémies d'alimentation, de vis d'injection et de buses d'injection séparées que les moules comportent de points d'injection; en ce que les buses sont alimentées directement par les vis; en ce que l'entraînement en rotation, le freinage, l'indexation et le blocage du plateau rotatif porte-moules, sont assurés directement par le recul du coulisseau (6) supportant l'unité d'injection; en ce que l'indexation précise et le blocage en position du plateau porte-moules (I) pendant l'injection, sont assurés par un doigt escamotable (I4) qui entre en action dès que l'unité d'injection arrive en fin de course de recul; et en ce que les embouts d'injection sont disposés parallèlement entre eux.

2. Machine à mouler les matières plastiques, selon la revendication I, caractérisée en ce que les vis inférieures de l'unité d'injection sont disposées côte à côte et en ce que les vis des rangées supérieures sont disposées en V, selon des angles tels que les trémies d'alimentation puissent être placées côte à côte, directement à l'aplomb de chaque vis.

3. Machine à mouler les matières plastiques, selon la revendication I, caractérisée en ce que la rotation du plateau rotatif porte-moules (I) est assurée par une roue libre ou une roue à rochets (II), entraînée par le coulisseau (6) de l'unité d'injection, lors du recul de celui-ci.

4. Machine à mouler les matières plastiques, selon la revendication 3, caractérisée en ce que la roue libre ou la roue à rochets (II) est reliée au coulisseau (6) de l'unité d'injection par une bielle (Io) et une tige coulissante (9), réglables en position relative.

5. Machine à mouler les matières plastiques, selon la revendication 4, caractérisée en ce que la bielle (IO) d'entraînement de la roue libre ou de la roue à rochets (II) est reliée à la tige (9) par un oeil (3I), monté entre deux ressorts (32 et 33) à tension et à position réglables par un système de vis et écrous (34 et 35).

6. Machine à mouler les matières plastiques, selon la revendication I, caractérisée en ce que le doigt escamotable (I4) servant à l'indexation précise et au blocage du plateau rotatif porte-moules (I), est constitué d'un tronc de prisme (27) prolongé par une partie parallélépipèdique (28) à l'extrêmité de laquelle sont montés deux roulements à billes ou galets (26).

7. Machine à mouler les matières plastiques, selon la revendication 6, caractérisée en ce que l'indexation et le blocage du plateau porte-moules (I), sont obtenus par pénétration du doigt escamotable (I4) dans des rainures (29), de même forme et de mêmes dimensions que celles de celui-ci, disposées régulièrement, selon le nombre de moules, à la périphérie d'un plateau d'indexation (I5), fixé à la base du plateau rotatif porte-moules (I).

8. Machine à mouler les matières plastiques, selon la revendication I, caractérisée en ce que le déplacement longitudinal du coulisseau (6) supportant l'unité d'injection, est assuré par un vérin à double effet (8).

FIG_1

-1/4-

0057148

FIG.2

FIG.3

# FIG.4

# FIG.5

# FIG.6